Europäisches Patentamt

European Patent Office

Office européen des brevets

(11) Publication number: **0 318 753 B1**

# EUROPEAN PATENT SPECIFICATION

(45) Date of publication of patent specification: **15.01.92**

(51) Int. Cl.⁵: **B60G 11/08**, F16F 1/18, B60G 3/28, B60G 21/04

(21) Application number: **88118975.7**

(22) Date of filing: **14.11.88**

(54) **Transverse leaf spring type suspension.**

(30) Priority: **01.12.87 JP 303598/87**

(43) Date of publication of application:
**07.06.89 Bulletin 89/23**

(45) Publication of the grant of the patent:
**15.01.92 Bulletin 92/03**

(84) Designated Contracting States:
**DE FR GB IT SE**

(56) References cited:
**EP-A- 0 189 241**
**EP-A- 0 243 102**
**US-A- 2 458 548**
**US-A- 2 697 613**
**US-A- 4 422 666**

**N.P. CHIRONIS: "Spring design and application", 1961, chapter 10, pages 242-246, McGraw-Hill Book Co. Inc., New York, US**

(73) Proprietor: **HONDA GIKEN KOGYO KABUSHIKI KAISHA**
**1-1, 2-chome Minami-Aoyama**
**Minato-ku Tokyo(JP)**

(72) Inventor: **Sano, Shoichi**
**c/o Kabushiki Kaisha Honda Gijutsu Kenkyusho**
**4-1 Tyuo 1-chome Wako-shi Saitama-ken(JP)**
Inventor: **Ogura, Masami**
**c/o Kabushiki Kaisha Honda Gijutsu Kenkyusho**
**4-1 Tyuo 1-chome Wako-shi Saitama-ken(JP)**
Inventor: **Kajiwara, Hajime**
**c/o Kabushiki Kaisha Honda Gijutsu Kenkyusho**
**4-1 Tyuo 1-chome Wako-shi Saitama-ken(JP)**
Inventor: **Fujita, Yasushiko**
**c/o Kabushiki Kaisha Honda Gijutsu Kenkyusho**
**4-1 Tyuo 1-chome Wako-shi Saitama-ken(JP)**

(74) Representative: **Fincke, Karl Theodor, Dr. Dipl.-Phys. et al Patentanwälte Dipl.-Ing. H.Weickmann Dipl.-Phys.Dr. K.Fincke Dipl.-Ing. F.A.Weickmann Dipl.-Chem. B. Huber Dr. Ing. H. Liska Dipl.-Phys.Dr. J. Prechtel Postfach 860820 W-8000 München 86(DE)**

## Description

The invention relates to a transverse leaf spring type suspension for a car having an engine supported by a body of the car comprising a transverse leaf spring operatively associated at opposite ends via knuckles with right and left wheels of the car, said leaf spring being freely supported at two intermediate points by the car body, a portion of the spring between the two points being movable vertically according to vertical motion of the wheels, the center of the leaf spring being curved about the engine along a length defined between the two points in the direction of the longitudinal axis of the car so as to form a curved portion, lengths extending from the respective points to the ends of the leaf spring being linear so as to form linear portions, rocking shafts being connected by suspension arms to the knuckles.

A suspension of this type, corresponding to the preamble of claim 1, is known from EP-A-0 243 102. In this suspension, the linear portions extend obliquely with respect to the rocking shaft to the effect that a torsional moment is exerted on the linear portions of the leaf spring.

The object of this invention is to provide a leaf spring type suspension having a leaf spring adapted to be free from any significant torsional moment produced due to a vertical movement or other movements of the wheels when the leaf spring is made of material being unable to provide an adequate resistance to said torsional moment.

For the accomplishment of this object, the suspension of the above-described type is characterized in that the linear portions extend substantially perpendicularly with respect to the rocking shafts.

When the suspension under the present invention is used, the torsional moment exerted on the linear portions of the leaf spring and related torsional moments exerted on the supporting points are reduced to a minimum level.

In particular, the invention has proved its worth with the leaf spring serving as a lower or an upper arm.

Due to the small torsional moment of the leaf spring, the latter is made from synthetic resin.

## BRIEF DESCRIPTION OF THE DRAWINGS

The transverse leaf spring type suspension of the invention as used with the front wheels of FF car and having the leaf spring serving also as the the lower arm is illustrated, by way of example, in the accompanying drawings in which:

Fig. 1 is a plan view schematically illustrating a relationship between a curved leaf spring and car components such as wheels and an engine;

Fig. 2 is a schematic front view corresponding to Fig. 1;

Fig. 3 is a plan view similar to Fig. 1, illustrating a transverse leaf spring comprising curved portions and linear portions;

## DESCRIPTION OF THE PREFERED EMBODIMENTS

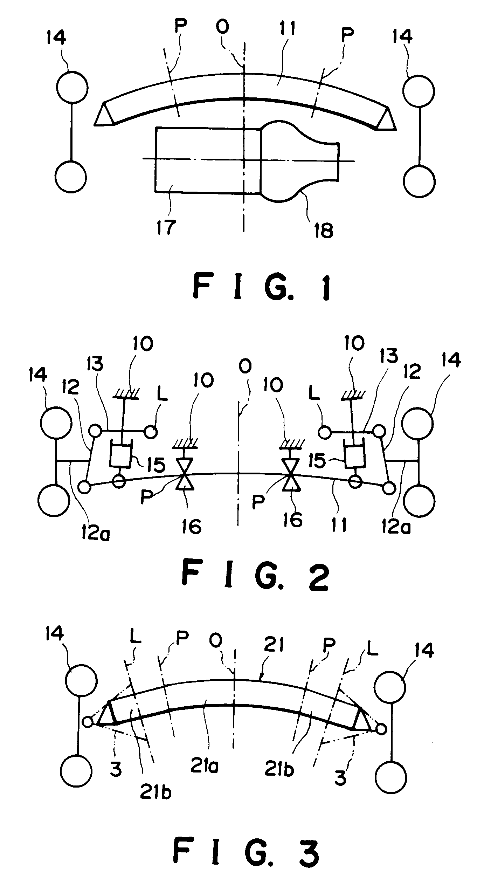

The transverse leaf spring type suspension constructed in accordance with the present invention will be described, by way of example, in reference with Figs. 1 through 3 of the accompanying drawing.

Referring to Fig. 2 which is a front view schematically illustrates this suspension as mounted in association with the front wheels of FF (Front engine-Front drive) car, a leaf spring 11 having its longitudinal axis extending transversely of a car body 10 serves also as a lower arm and lower ends of respective knuckles 12 are operatively associated with opposite ends of said leaf spring 11 through means such as ball joints. Upper arms 13 are supported by associated rocking shafts L for rocking therearound with respect to the car body 10 and operatively associated at ends remote from the respective rocking shafts L with upper ends of the respective knuckles 12. Knuckle shafts 12a rotatably support respective wheels 14. There are provided adjacent the opposite ends of the leaf spring 11 strut dampers 15 of which upper ends support the car body 10. The leaf spring 11 is supported at intermediate two points P along its length on the car body 10 with interposition of associated mount rubbers 16. Reference symbol O designates a central axis of the car body.

As seen in Fig. 1 which is schematic plan view, the leaf spring 11 is curved in the direction in which the car moves back so that an engine 17 and a transmission 18 may be disposed in a space provided by this curved portion.

The suspension shown by Figs. 1 and 2 operates in such a manner as will be described below.

Referring to Fig. 2, vertical movement of the wheels 14 causes the respective upper arms 13 to be rocked around the associated rocking shafts L. Simultaneously, the portions of the leaf spring 11 extending from the respective support points P to the adjacent ends are rocked around the associated support points P. Thus, elasticity of the leaf spring 11 allows such vertical movement of the wheels 14 relative to the car body 10 minimizing transmission of the vibration to the car body 10.

The car components such as the engine 17 and the transmission 18 can be located in the space provided by the curved portion of the leaf spring 11, so the suspension having the transverse leaf spring 11 can be employed even when said components such as the engine 17 are present between the right and left wheels 14.

Fig. 3 is a plan view similar to Fig. 1 and schematically illustrates the leaf spring 21 having a configuration which is suitable when said leaf spring 21 is made of material being unable to provide an adequate resistance to a possible torsional moment. The leaf spring 21 of this suspension is provided with right and left support points P and a portion extending between these support points P is curved in the direction in which the car moves back to form a curved portion 21a. Portions extending from the respective support points P to the adjacent ends of the leaf spring 21 form respective linear portions 21b having orientations defined respectively by tangent lines at the respective support points P of said curved portion 21a. These linear portions 21b extend towards the associated wheels 14 substantially in perpendicular to the respective rocking shafts L of the upper arms 13, each of the rocking shafts L making an angle with the central axis O of the car. The wheels 14 are operatively associated, in the same manner as has previously been mentioned, with outer ends of the respective linear portions 21b through the knuckles 12.

The suspension of Fig. 3 operates as follows:

Vertical movement of the wheels 14 causes, in the same manner as has been mentioned above, the upper arms 13 to be rocked around the associated rocking shafts L and simultaneously the ends of the leaf spring 11 are rocked around the respective support points P. Thus, transmission of vibration to the car body is substantially avoided.

In the case of the leaf spring 11 having the portions extending from the respective support points P to the adjacent ends which are also curved as shown in Fig. 1, these portions are not perpendicular to the rocking shafts L of the associated upper arms 13 but have their orientations varying point to point. With a consequence, direction of a force exerted on each point along said portions varies as the wheels 14 vertically move, producing a high torsional moment exerted on the support points P. Accordingly, the leaf spring 11 of this configuration is not preferable in regard to a strength required to resist such high torsional moment and when the leaf spring 11 is made of synthetic resin such as FRP, no adequate durability can be expected.

But if the linear portions 21b are substantially perpendicular to the associated rocking shafts L as in the leaf spring 21 shown by Fig. 3, a torsional moment possibly exerted on each of said linear portions 21b will be substantially lower than that exerted on the corresponding portion which is curved. With a consequence, the leaf spring 21 may be made of FRP or other synthetic resin.

Although the embodiment has been described hereinabove as having a pair of support points P along the length of the leaf spring, it is also possible to provide the leaf spring along its length with four support points P, more specifically, a pair of support points P along the right half and another pair of support points P along the left half of the length. When there are provided a plurality of support points along the right and left halves of the length, respectively, it is preferable that the portions of the leaf spring respectively defined between a pair of support points most adjacent to the associated wheels 14 are formed as curved portions 21a. The portions respectively defined between the respective outermost support points P and the ends adjacent thereto are formed as linear portions 21b.

Although this embodiment has been illustrated with the leaf spring serving also as the lower arm, it is also possible within the scope of this invention that the leaf spring serves also as the upper arm or there is provided the leaf spring separately of the suspension arms. Furthermore, the suspension of this invention may be also mounted on the rear wheels or FR (Front engine-Rear drive) car, although the embodiment has been discussed above in connection with the front wheels of FF car.

As will be apparent from the foregoing description, the transverse leaf spring type suspension constructed in accordance with this invention has the leaf spring being so curved to define a space within which the car components such as the engine and the differential gear, so the transverse leaf spring may be adopted even when said car components are present between the right and left wheels. When the suspension arms have the rocking shafts each making an angle with the central axis of the car body, the invention allows the leaf spring to extend somewhat in perpendicular to these rocking shafts, so that the torsional moment possibly exerted on this leaf spring is smaller than that exerted on the linear leaf spring and the durability of the leaf spring is thereby improved.

By forming the portions of the leaf spring extending from the respective points at which the leaf spring is supported on the car body to the ends adjacent to the respective support points as the linear portions, it is possible to make the leaf spring extend substantially in perpendicular to the respective rocking shafts of the suspension arms. Thereby the torsional moment possibly exerted on the leaf spring is further reduced than that exerted on the leaf spring curved along its full length and synthetic resin such as FRP can be used as material for the leaf spring. Thus, it is possible to realize a light weight leaf spring and, therefore, a light weight car. Furthermore, the respective rocking shafts of the suspension arms can be inclined with respect to the central axis of the car body, increasing the degree of freedom for design and achieving the transverse leaf spring type suspension having a suspension geometry preferable for maneuverability and stability.

## Claims

1. A transverse leaf spring type suspension for a car having an engine (17) supported by a body (10) of said car comprising a transverse leaf spring (11; 21) operatively associated at opposite ends via knuckles (12) with right and left wheels (14) of said car, said leaf spring (11; 21) being freely supported at two intermediate points (P) by said car body (10), a portion of said spring (11; 21) between said two points (P) being movable vertically according to vertical motion of said wheels (14), the center (21a) of said leaf spring (11; 21) being curved about said engine (17) along a length defined between said two points (P) in the direction of the longitudinal axis of said car so as to form a curved portion (21a), lengths (21b) extending from the respective points (P) to the ends of the leaf spring (11; 21) being linear so as to form linear portions (21b), rocking shafts (L) being connected by suspension arms (13) to said knuckles (12),
   **characterized in** that said linear portions (21b) extend substantially perpendicularly with respect to said rocking shafts (L).

2. A transverse leaf spring type suspension according to claim 1 in which said leaf spring (11; 21) serves as a lower arm.

3. A transverse leaf spring type suspension according to claim 1 in which said leaf spring (11; 21) serves as an upper arm.

4. A transverse leaf spring type suspension according to at least one of the claims 1 to 3, in which said leaf spring (11; 21) is made from synthetic resin.

## Revendications

1. Suspension du type à ressort à lame transversal pour automobile ayant un moteur (17) supporté par la carrosserie (10) de ladite automobile, comprenant un ressort à lame transversal (11; 21) coopérant à ses extrémités opposées par l'intermédiaire de rotules (12) avec les roues gauches et droites (14) de ladite automobile, ledit ressort (11; 21) à lame étant supporté librement en deux points intermédiaires (P) par ladite carrosserie (10) de l'automobile, une partie dudit ressort (11; 21) située entre lesdits deux points (P) étant mobile verticalement en fonction du mouvement vertical desdites roues (14), le centre (21a) dudit ressort (11; 21) à lame étant courbe autour dudit moteur (17) sur une longueur définie entre lesdits deux points (P) dans le sens de l'axe longitudinal de ladite automobile de façon à former une partie courbe (21a), les longueurs (21b) s'étendant depuis les points respectifs (P) jusqu'aux extrémités du ressort (11;21) à lame étant linéaires de façon à former des parties linéaires (21b), des arbres oscillants (L) étant reliés auxdites rotules (12) par des bras de suspension (13),
   **caractérisée** en ce que lesdites parties linéaires (21b) s'étendent d'une manière sensiblement perpendiculaire par rapport auxdits arbres oscillants (L).

2. Suspension du type à ressort à lame transversal selon la revendication 1, dans laquelle ledit ressort (11; 21) à lame sert de bras inférieur.

3. Suspension du type à ressort à lame transversal selon la revendication 1, dans laquelle ledit ressort (11; 21) à lame sert de bras supérieur.

4. Suspension du type à ressort à lame transversal selon au moins l'une des revendications 1 à 3 dans laquelle ledit ressort (11; 21) à lame est en résine synthétique.

## Patentansprüche

1. Radaufhängung vom Typ einer Querblattfeder für ein Fahrzeug mit einem von einer Karosserie (10) des Fahrzeugs gehaltenen Motor (17), umfassend
   eine Querblattfeder (11;21), der an gegenüberliegenden Enden über Kuppelstücke (12) linke und rechte Räder (14) des Fahrzeugs betriebsmäßig zugeordnet sind,
   wobei die Blattfeder (11;21) an zwei zwischenliegenden Punkten (P) von der Fahrzeugkarosserie (10) freitragend gehalten ist,
   ein Abschnitt der Feder (11;21) zwischen diesen zwei Punkten (P) in Antwort auf vertikale Bewegung der Räder (14) vertikal beweglich ist,
   das Mittelteil (21a) der Blattfeder (11;21) längs einer zwischen den beiden Punkten (P) begrenzten Strecke in Richtung der Längsachse des Fahrzeugs um den Motor (17) herum gekrümmt ist und somit einen gekrümmten Abschnitt (21a) bildet,
   von den jeweiligen Punkten (P) zu den Enden der Blattfeder (11;21) Strecken (21b) unter Bildung linearer Abschnitte (21b) linear verlaufen und

Schwenkwellen (L) über Aufhängungsarme (13) an den Kuppelstücken (12) angeschlossen sind,

**dadurch gekennzeichnet,**

daß die linearen Abschnitte (21b) relativ zu den Schwenkwellen (L) im wesentlichen senkrecht verlaufen.

2. Radaufhängung vom Typ einer Querblattfeder nach Anspruch 1, wobei die Blattfeder (11;21) als ein unterer Arm dient.

3. Radaufhängung vom Typ einer Querblattfeder nach Anspruch 1, wobei die Blattfeder (11;21) als ein oberer Arm dient.

4. Radaufhängung vom Typ einer Querblattfeder nach einem der Ansprüche 1 bis 3, wobei die Blattfeder (11;12) aus Kunstharz hergestellt ist.

F I G. 1

F I G. 2

F I G. 3